# EUROPEAN PATENT APPLICATION

(11) **EP 0 965 400 A2**
(43) Date of publication of application: **22.12.1999**
(21) Application number: 99500102.1
(22) Date of filing: 11.06.1999
(51) Int. Cl.: B21J 15/08, F16B 19/08

(54) **Method and apparatus for riveting plastics parts**

(30) Priority: 16.06.1998 ES 9801261
(71) Applicant: Rabasso, Emilio Pujadas, 08184 Palau de Plegamans, Barcelona (ES)
(72) Inventor: Rabasso, Emilio Pujadas, 08184 Palau de Plegamans, Barcelona (ES)
(74) Representative: Duran Moya, Luis-Alfonso

(57) **Abstract**

The invention provides for a first step of heating of the article to be rivetted by means of a current of hot air projected onto the said article at a predetermined temperature and rate of flow, until the article to be rivetted softens, and then proceeding with the application of a rivetting head at ambient temperature, which has the desired rivetting shape, by compression on the thermally softened article to be rivetted, and resting in the said position for a previously set period of time before proceeding to raise the rivetting unit.

## Description

The present invention refers to a method and its apparatus for rivetting plastics parts, especially parts for retaining laminar plates of different materials such as plastic and metallic plates or other types of plates.

The method and apparatus of the present invention are intended to permit the rivetting of parts in the form of plastics tubular parts or the like with great simplicity and economy of means with respect to the currently known methods and apparatuses, additionally making it possible to obtain much more precise control of the process. In addition, the method and apparatus of the present invention likewise make it possible to obtain an important advantage with regard to the purchase price of the equipment used which at present, and having regard to the ultrasonic rivetting equipment most frequently used, has a very high price.

The method of the present invention is based essentially on proceeding with the heating of the plastics rivet which, as indicated, preferably assumes a tubular structure of small dimensions, by means of a jet of air at high temperature, then proceeding with the rivetting of the article of plastics material, heated previously until softened, by means of a cold punch which has the shape desired for the rivetted part. The compression of the hot rivet is followed by a period of rest, after which the said cold punch is separated, with the rivetting operation having been completed.

According to the present method, the hot air may be regulated with regard to volume and temperature for the different types of articles which it is desired to rivet.

The heat source may be a single one for a series of nozzles, each intended individually for the rivetting of a specific point. This arrangement will be especially suitable in the case of installations intended to carry out the mass production rivetting of parts intended, for example, for the automotive or other industries.

The apparatus of the present invention will essentially comprise a centralized heating device in which the heating of a flow of air to the desired temperature will take place, the said hot air passing to a distribution manifold with multiple heating nozzles, each of which will be situated at the desired rivetting location. The centralized heating device may assume many different forms without affecting the essence of the invention, although in a preferred embodiment it may assume the structure of different successive plates forming a single package. Said plates will have grooves and communication openings to form with the assembly of plates a long labyrinthine path which will be subjected to the heating produced by electrical resistances incorporated in the heating apparatus or other means. In this way, a hot air generator will be obtained which, starting from a cold air inlet, will bring hot air to multiple outlets provided in the last plate of the device, each of the said outlets having a nozzle for projecting the jet of air with the characteristics and desired positioning according to the part which it is desired to rivet.

For greater understanding there are appended, by way of explanatory but non-limiting example, drawings showing an exemplary embodiment of the method and apparatus of the present invention.

Figures 1 to 4 show, diagrammatically, different views corresponding to the successive steps of presentation, heating and rivetting.

Figure 5 is a view in elevation of a head carrying a series of rivetting units.

Figure 6 shows in detail a rivetting head in a longitudinal section thereof.

Figures 7 and 8 are details which show the placing of a positioning device with respect to the rivetting heads.

Figures 9 and 10 are views in elevation and partial section of a heating head according to the present invention.

Figures 11 to 15 are diagrammatic plan views of different plates constituting the heating apparatus.

Figure 16 shows a longitudinal section through a nozzle for projecting hot air for rivetting.

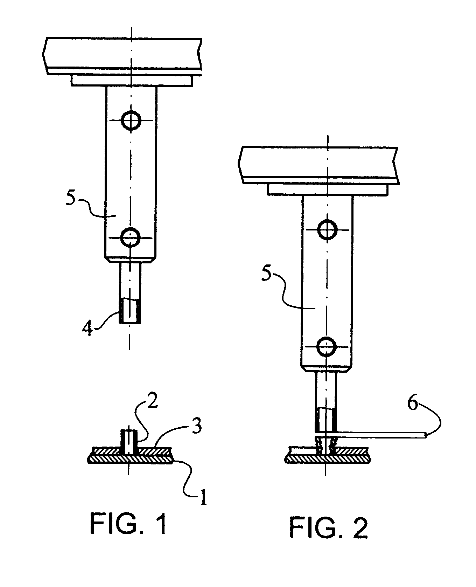

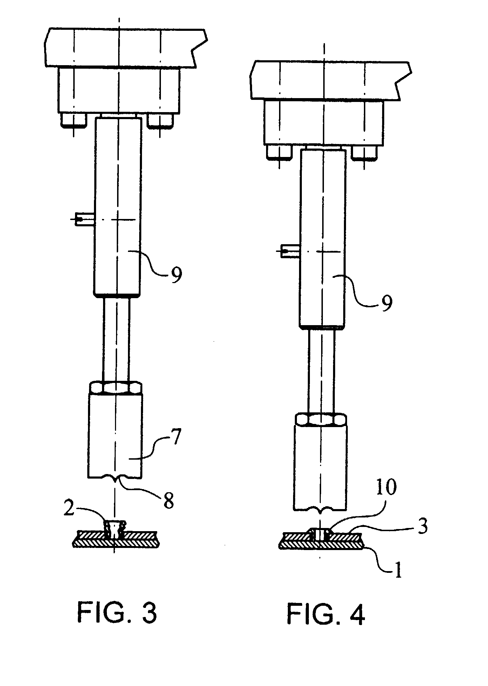

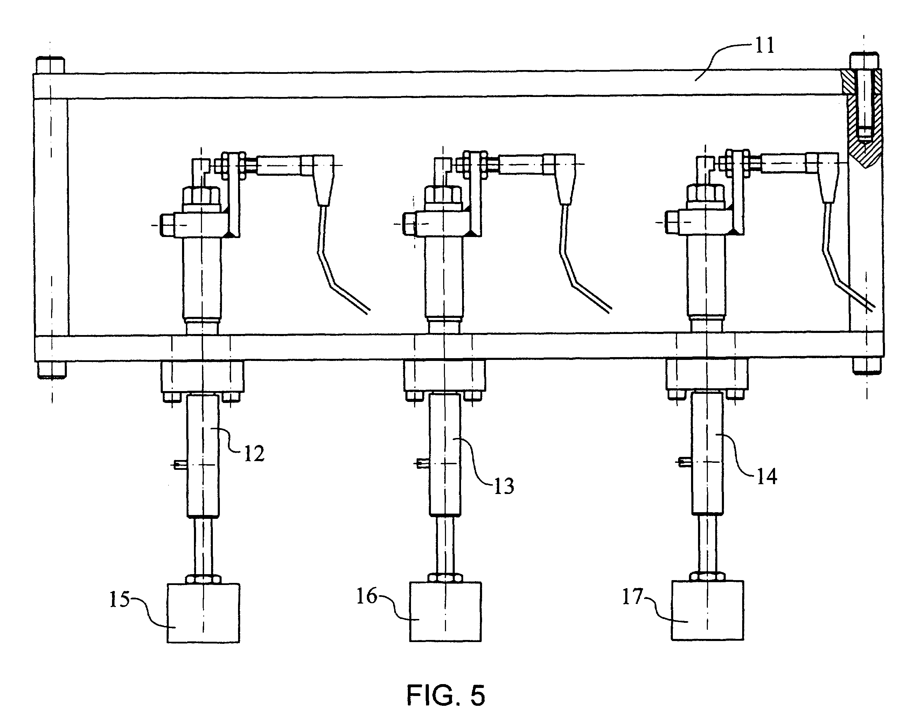

As shown in the Figures, the method of the present invention aims to proceed with the rivetting of articles in the form of small cylindrical tubular parts or the like, made of plastics, for the joining of parts of different types. In the example shown, there can be seen a plate of plastics material 1, from which extend the small tubular parts to be rivetted 2, and which is intended to be joined to another plate 3, made of another plastics, metallic or other type of material, rivetting being carried out by means of projection of hot air through a nozzle 4 of a movable head 5. After the approach of the head 5 to the tubular part 2, as shown in Figure 2, leaving a very reduced gap which has been indicated by the numeral 6, a jet of hot air is projected, which is sufficient to cause softening of said tubular part 2, as shown, for greater understanding, in the said Figure 2. Then the rivetting of the article in the form of a tubular part 2, which is hot and softened, will be carried out by means of a cold rivetting head 7 carrying on the active face 8 the complementary shape to that which it is desired to obtain on the rivetted part. The rivetting unit 9 will move to make contact with the tubular parts 2, which has not been shown in the figures, and will remain in the said position, after imparting the desired shape to the rivetted tubular parts, for a certain cooling period, after which the said unit 9 will separate again, as shown in Figure 4, but already in ascending motion to separate itself from the rivetted head 9, which assumes the desired form and which effectively joins the laminar articles 1 and 3. The method of the present invention will be especially suitable for assemblies with multiple rivetting points, wherein a movable head, for example, that indicated by the numeral 11 in Figure 5, will have several rivetting units such as those indicated by the numerals 12, 13 and 14, each of which will carry its rivetting head 15, 16 and 17. It will make possible the arrangement of the different rivetting units in precise locations for carrying out mass production assembly, for example, in the automobile industry, so that the head 11 will be arranged corresponding to the part which it is intended to rivet with several rivets in the corresponding positions of the units 12, 13 and 14.

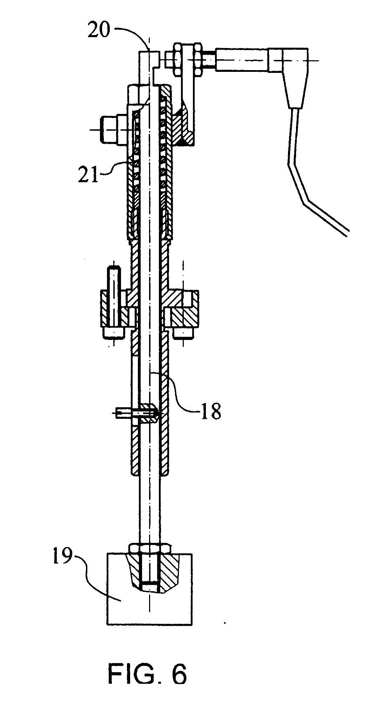

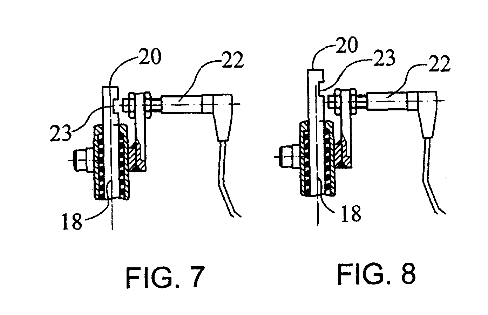

Figures 6 to 8 show the specific constitution of a rivetting unit which comprises a movable rod 18 coupled to the lower rivetting head 19 and which receives at the top, in a manner which is not shown, an axial thrust on the end head 20 by means of a pneumatic, hydraulic, electromagnetic or other type of device and which additionally receives the opposing action of the spring 21. The said unit carries a built-in position detector, as can be seen in Figures 7 and 8, from the position detector 22, and a recess 23 in the vicinity of the end of the rod 18. With this arrangement the result is obtained that the detector can detect an incorrect positioning of the rod 18 at the end of rivet-ting, for example, as shown in Figure 8, thus controlling the correct functioning of the apparatus.

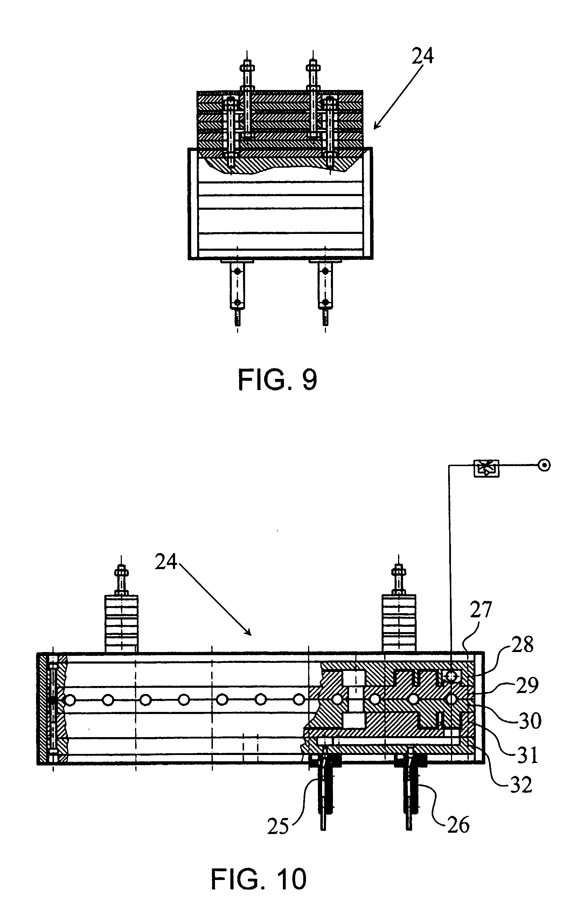

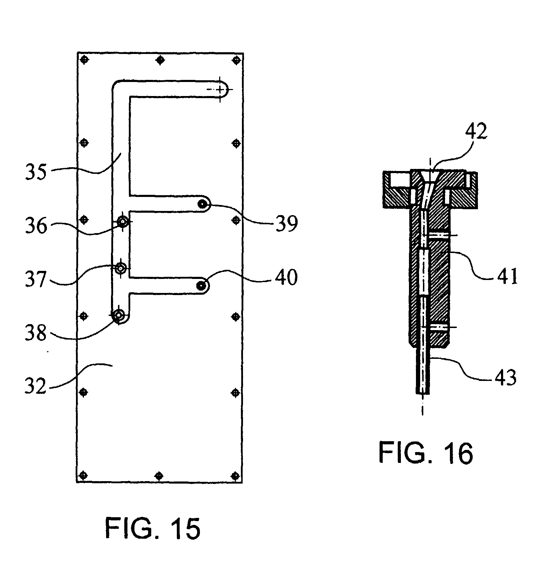

The heating nozzles which project the corresponding jets of hot air to the rivets are fed by an air heating device, as shown in Figures 9 and 10. The said air heating device may be of a different kind, being shown, in the figures indicated, by the numeral 24. Once the air is heated inside the device 24, it will be distributed to the different nozzles, such as those indicated by way of example, 25 and 26, which will be arranged corresponding to the rivetting units indicated in Figure 15 so that it is possible to industrialize in the same way the heating and the rivetting immediately following it.

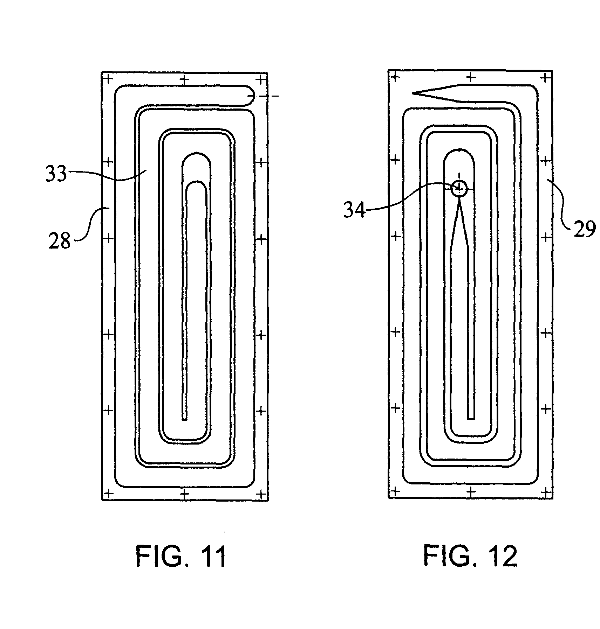

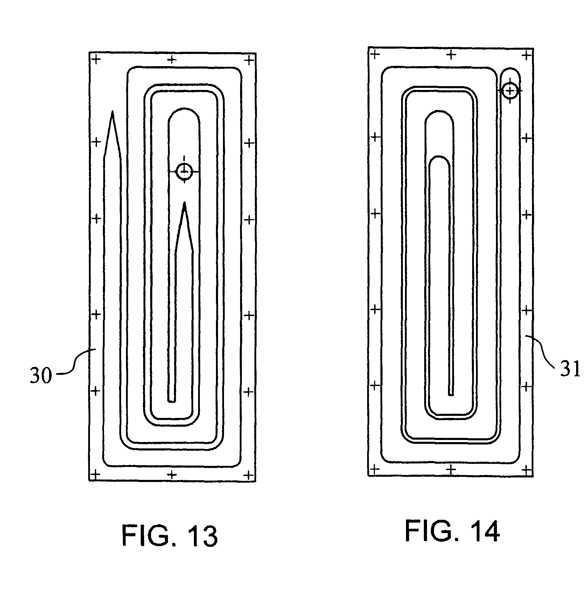

In the example shown, the heating device comprises multiple successive plates forming a single body with an external supporting casing 27. The said plates have been shown by the numerals 28, 29, 30, 31 and 32, which have been shown in plan views with greater detail in Figures 11 to 15 respectively.

The above-mentioned plates have grooves in a substantially spiral arrangement such as the grooves 33 shown in the plate 28, which force the air on a tortuous path through the inside of the plate, then passing by means of a communication opening, for example, the opening 34, shown in the plate 39, to the following plate and thus, successively, so that the assembly of grooves of the different plates give rise to a labyrinthine path for the air which is to be heated. The last plate has a distribution groove of specific shape 35, into which will open the feed outlets of the different heating nozzles, which have been shown by way of example by the numerals 36, 37, 38, 39 and 40.

The above-mentioned heating nozzles will have a composition which by way of example has been shown in Figure 16, in which can be seen the body of a nozzle 41 which has an inlet opening 42 which will communicate with the distribution groove 35 of the plate 32, and which will have an end nozzle 43 which will be that which actually projects the jet of hot air to the tubular parts which is to be rivetted.

The air heating devices may be heated, for example, by means of resistances with high power cartridges and, according to requirements, will have one or more temperature regulators to maintain the latter at the predetermined working level. It will be understood, however, that apart from electric heaters, it would be possible to use any type of heater capable of providing a volume of air at the desired regulated temperature and in the required quantity.

Anything that does not affect, alter, change or modify the essence of the method described may be varied for the purpose of the present invention.

## Claims

1. Method for rivetting plastics parts, characterized in that it comprises a first step of heating of the article to be rivetted, by means of a flow of hot air projected onto the said article at a predetermined temperature and volume, until the article to be rivetted softens, and then proceeding with the application of a rivetting head at ambient temperature, which has the desired rivetting shape, by compression on the thermally softened article to be rivetted, and resting in the said position for a previously set period of time before proceeding to raise the rivetted unit.

2. Apparatus for the execution of the method of Claim 1, characterized in that it comprises for each point to be rivetted a heating nozzle carrying the flow of hot air, having means for regulating said flow and being movable axially until it is located a short predetermined distance from the article to be rivetted, the apparatus further comprising an assembly of rivetting units, likewise movable axially, corresponding in position to each of the heating nozzles.

3. Apparatus according to Claim 2, characterized in that it comprises multiple heating nozzles coupled to the same vertically movable head, the said heating nozzles being positioned according to the positions which correspond to the different points to be rivetted.

4. Apparatus according to Claims 2 and 3, characterized in that all the heating nozzles are fed from a single air heating head to which they are rigidly coupled, and the said heating head being movable between a rest position and a position for heating the points to be rivetted, with a predetermined gap with respect to the articles to be rivetted.

5. Apparatus according to Claims 2 to 4, characterized in that the rivetting units are individually constituted by a rod axially movable in an encasing body carrying the rivetting head at the bottom and capable of receiving at the top an axial thrust for its movement, overcoming an internal opposing spring and having at its upper end a position detector capable of monitoring the correct rivetting position.

6. Apparatus according to Claim 5, characterized in that the device for detecting the positioning of the rivetting unit has a position detector which acts in co-ordination with a recess provided in the upper end of the movable rod carrying the rivetting head.

7. Apparatus according to Claim 3, characterized in that the heating device is constituted by an assembly of multiple plates carrying grooves in their surface and coupled to one another, forming a single movable package which forms a labyrinthine passage for the air proceeding from an inlet provided in the first plate, and which will circulate to the distributing groove of the last plate on which are connected the heating nozzles.

8. Apparatus according to Claim 7, characterized in that the heating of the assembly of plates is carried out by means of high power electrical resistances incorporated in the assembly constituted by the successive application of the said plates and rigidly connected by means of an external encasing body.
